# EUROPÄISCHE PATENTSCHRIFT

(11) **EP 1 419 412 B1**
(45) Veröffentlichungstag und Bekanntmachung des Hinweises auf die Patenterteilung: **23.05.2012**
(21) Anmeldenummer: 02760135.0
(22) Anmeldetag: 26.08.2002
(51) Int. Cl.: G02C 7/02

(54) **VERFAHREN ZUM ENTWERFEN UND OPTIMIEREN EINES INDIVIDUELLEN BRILLENGLASES**
METHOD FOR DESIGNING AND OPTIMIZING AN INDIVIDUAL SPECTACLE GLASS
PROCEDE POUR CONCEVOIR ET OPTIMISER UN VERRE DE LUNETTE INDIVIDUEL

(30) Priorität: 24.08.2001 DE 10140656
(43) Veröffentlichungstag der Anmeldung: 19.05.2004
(73) Patentinhaber: Rodenstock GmbH, 80469 München (DE)
(72) Erfinder: WELK, Andrea, 81547 München (DE); HAIMERL, Walter, 80337 München (DE); ESSER, Gregor, 81735 München (DE); BAUMBACH, Peter, 81543 München (DE); ALTHEIMER, Helmut, 87650 Lauchdorf (DE); WEHNER, Edda, 82275 Emmering (DE)
(74) Vertreter: Müller-Boré & Partner Patentanwälte
(86) Internationale Anmeldenummer: PCT/DE2002/003126
(87) Internationale Veröffentlichungsnummer: WO 2003/019269

(56) Entgegenhaltungen:
- EP-A- 1 116 983
- EP-A1- 0 880 046
- WO-A-00/55678
- DE-A1- 4 210 008
- PATENT ABSTRACTS OF JAPAN vol. 1998, no. 11, 30. September 1998 (1998-09-30) & JP 10 175149 A (SEIKO EPSON CORP), 30. Juni 1998 (1998-06-30)

## Beschreibung

### Technisches Gebiet

Die Erfindung bezieht sich auf ein Verfahren zum Entwerfen und Optimieren eines individuellen Brillenglases.

### Stand der Technik

Ein Augenoptiker kann mit herkömmlichen Bestellsystemen beispielsweise der Firmen Optische Werke G. Rodenstock, München, Carl Zeiss, Aalen oder Essilor, Frankreich nur Standard-Parameter, wie die Rezeptwerte, d.h. insbesondere die sphärische Wirkung (im Fernteil), die Addition bei einem Zweistärken- oder Progressivglas, den benötigten Korrektur-Astigmatismus sowie das Prisma, ferner die Pupillendistanz, den Hornhautscheitelabstand o.ä. angeben. Zusammen mit der Wahl des Glastyps (z.B. Progressiv life oder Impression bei den Optischen Werken G. Rodenstock) liegt dann das Design des Brillenglases und insbesondere der progressiven Fläche und gegebenenfalls einer individuellen zweiten Fläche bereits fest.

Unter dem Begriff "Design" oder "optisches Design" versteht man in diesem Zusammenhang die Art der räumlichen Verteilung der Abbildungsfehler auf dem Brillenglas. Die Bereiche guter Sicht (niedrige Abbildungsfehler) sind von den Bereichen schlechter Sicht (hohe Abbildungsfehler) durch eine oder mehrere Linien getrennt. Die Abbildungsfehler können dabei auf unterschiedliche Weise definiert werden; gängige Definitionen sind beispielsweise der Refraktionsfehler, die Größe des Flächenastigmatismus, der Rest-Astigmatismus in Gebrauchsstellung, d.h. der nicht zur Korrektur eines Augenastigmatismus verbleibende Gesamtastigmatismus (vektorielle Addition des Flächenastigmatismus und des Astigmatismus schiefer Bündel), der Visus und/oder die Verzeichnung. Beim Refraktionsfehler und beim Rest-Astigmatismus wird häufig ein Wert von 0,5 dpt., selten größere Werte bis zu 1,0 dpt. als Grenze zwischen dem Bereich guter und schlechter Sicht verwendet. Selbstverständlich können aber auch die verschiedenen Größen in Kombination (gewichtet) bewertet werden. Die vorstehende Aufzählung von Bildfehlern, die zur Abgrenzung des Bereichs guter Sicht von dem schlechter Sicht dienen, ist jedoch nicht abschließend.

Bei Einstärkengläsern gibt es in der Regel einen zentralen kreisförmigen oder elliptischen Bereich guter Sicht, der den Zentrierpunkt enthält. Bei Gleitsichtgläsern gibt es mindestens drei Bereiche guter Sicht, nämlich den Fernbereich, den Nahbereich und den Progressionskanal. Dieser Progressionskanal wird aus geometrischen Gründen (Satz von Minkwitz) beidseitig durch zwei Zonen schlechter Sicht begrenzt.

Bei den klassischen Brillengläsern, die auf einem Basiskurvensystem beruhen, hängt das optische Design von der verwendeten Basiskurve, und die Basiskurve wiederum von der Verordnung ab. Die Rezeptfläche wird passend hinzu gerechnet; damit kann die Verteilung der Abbildungsfehler (bzw. der Sehbereiche) in keiner Weise mehr beeinflusst werden. Akzeptiert der Kunde das Design aus irgendwelchen Gründen nicht, d.h. kommt es zu Unverträglichkeiten oder ist es für eine spezielle Sehanforderung ungeeignet, so bleibt dem Augenoptiker nur die Möglichkeit, auf ein anderes Produkt auszuweichen.

In den letzten Jahren entwickelte sich in der augenoptischen Industrie ein Trend in Richtung Individualisierung.

In einem ersten großen Schritt hin zu individuellen Brillengläsern wurde eine Rezeptfläche in Form eines Atorus abhängig von der Verordnung optimiert. Ein Beispiel hierfür ist das Brillenglas "Multigressiv" der Optischen Werke G. Rodenstock.

In einem zweiten Schritt wurde die Rezeptfläche in die progressive Fläche integriert. Die resultierende Fläche ist eine sogenannte progressiv atorische Fläche. Ein Beispiel hierfür ist das Produkt "Impression ILT" der Optischen Werke G. Rodenstock. Auf alle vorstehend genannten bekannten Brillengläser der Optischen Werke G. Rodenstock wird zur Erläuterung aller hier nicht näher beschriebenen Begriffe und insbesondere der Individualisierungsdaten ausdrücklich Bezug genommen.

Bei dem bekannten Brillenglas "Impression ILT" wird nicht nur die Verordnung, sondern die gesamte individuelle Brille und deren individueller Sitz vor den Augen des Brillenträgers berücksichtigt. Dazu sind vom Augenoptiker (u.a.) die Daten des Hornhaut-Scheitelabstandes, der Pupillenabstand, die Vorneigung und der Fassungsscheibenwinkel zu messen und dem Hersteller mitzuteilen, der die Berechnung des individuellen Brillenglases durchführt.

Bei dem Brillenglas "Impression ILT" ist es ein Ziel, das für eine Wirkung um die Null dpt als optimal angesehene Design über das gesamte Wirkungsspektrum, d.h. auch für Fernteilwirkungen von -10 dpt. bis + 10 dpt. zu halten.

Auch bei den bekannten individuell optimierten Brillengläsern hat der Augenoptiker keinen direkten Einfluss auf das Design. Er kann lediglich durch sorgsames Arbeiten eine Verschlechterung der Abbildungsqualität vermeiden.

Damit ist es bisher dem Augenoptiker unmöglich, das Design des Brillenglases willentlich zu beeinflussen.

Der nächste Schritt auf dem Wege der Individualisierung ist damit das Design selbst. Aus der Patentliteratur sind bereits so genannte Design-Klassen bekannt, so z.B. Brillengläser für Autofahrer, für Out-Door-Aktivitäten, für Golfspieler, Tennisspieler u.s.w. Aber auch hier ist das Design im Endeffekt immer das Ergebnis der Entwicklung der optischen Industrie. Anders ausgedrückt ist das Design weiterhin durch Vorgaben der optischen Industrie bestimmt.

Die WO 00/55678 offenbart ein Verfahren zur Herstellung progressiver Brillengläser, bei denen die Verteilung der optischen Wirkung zwischen dem Fern- und dem Nahbezugspunkt im wesentlichen an die individuellen Anforderungen des Brillenträgers in Bezug auf den Verlauf der Blicklinien (eye paths) und der zugehörigen optischen Wirkung angepasst ist. Dabei wird insbesondere ein Verfahren beschrieben, bei dem zunächst der Verlauf der Blicklinien (eye paths) und die Brechkraftanforderung eines Brillenträgers gemessen wird, während der Brillenträger ein Objekt in der Ferne, in einer mittleren Distanz und in der Nähe betrachtet. Es wird dabei der Verlauf auf einer progressiven oder regressiven Fläche in Verlängerung zur Pupille des Brillenträgers an einigen diskreten Messpunkten bestimmt, während das Auge sich vom Anpasspunkt zum natürlichen Nahdurchblickspunkt des Brillenträgers bewegt. Auf der Basis der erforderlichen Brechkraft in den gemessenen Punkten des Verlaufs der Blicklinie wird ein individuelles Brillenglas hergestellt.

DE 42 10 008 A1 offenbart ein Verfahren zum Herstellen eines progressiven Brillenglases, wobei das progressive Brillenglas an die individuelle Gebrauchssituation des jeweiligen Brillenträgers angepaßt ist:

EP 0 880 046 A1 offenbart ein Verfahren zur Herstellung eines Gleitsichtbrillenglases. Das beschriebene Verfahren umfasst einen Linsenentwurfsvorgang, bei dem auf Basis von Kundeninformationen Parameter für den Entwurf des herzustellenden Brillenglases bestimmt werden. Die vom-Kunden in Zusammenarbeit mit einem Optiker bereitgestellten Kundeninformationen betreffen dabei einerseits Informationen, die die Augen des jeweiligen Benutzers betreffen (z.B. Refraktion, Augenabstand, Konvergenz), andererseits Informationen, die den Lebensstil des Benutzers betreffen. Die Informationen zum Lebensstil legen dabei den Beruf der Kunden (z.B. Anwalt, Arzt, Sporttrainer, Golfspieler, ...) und seine Freizeitbeschäftigung (z.B. Fischen, Golf, Wandern, Lesen, Schach, ...) fest.

Abhängig von dem vom Kunden ausgewählten Beruf ermittelt ein System einen intern dafür hinterlegten Entwurfsparameter den Beruf betreffend, während das System für das ausgewählte Hobby einen entsprechenden intern dafür hinterlegten Entwurfsparameter das Hobby betreffend auslegt. In Abhängigkeit von einer vom Kunden festgelegten Gewichtung zwischen Beruf und Hobby wird aus den einzelnen Entwurfsparametern ein entsprechend angepasster Entwurfsparameter ermittelt, der zur Beschreibung des der Herstellung des Brillenglases zugrunde liegenden Entwurfes herangezogen wird.

### Darstellung der Erfindung

Wenn man fest durch Vorgaben der optischen Industrie festgelegte Designs vermeiden will, ist es erforderlich, dass der Augenoptiker bzw. der Kunde im Geschäft des Augenoptikers aktiv planen kann, welches Designs er als optimal für den jeweils gewünschten bzw. von ihm als häufigsten angesehenen Anwendungsfall betrachtet. Damit benötigt der Augenoptiker eine Möglichkeit, mit dem er das ihm bzw. seinem Kunden geeignet erscheinende Design entwerfen kann.

Aufgabe der Erfindung ist es, ein Verfahren zum Entwerfen und Optimieren eines individuellen Brillenglases anzugeben.

Die Aufgabe wird durch den kennzeichnenden Teil des Patentanspruchs 1 gelöst. Weiterbildungen der Erfindung sind Gegenstand der abhängigen Ansprüche, auf deren Wortlaut für alle im Text der Beschreibung nicht erwähnten Merkmale ausdrücklich Bezug genommen wird.

Erfindungsgemäß erfolgt der Entwurf eines Designs dadurch, dass ein Augenoptiker oder ein Kunde an einem Bildschirmarbeitsplatz mittels eines Computerprogrammes festlegt, wie die Verteilung der Zonen guter Sicht auf dem Brillenglas bei dem gewünschten individuellen Brillenglas sein soll. Natürlich kann die Größe der einzelnen Zonen, wie z.B. der Fernsichtzone, der Nahsichtzone und der Progressionszone nur im Rahmen des technisch möglichen festgelegt werden. Dennoch ermöglicht dies im Vergleich zu Standard-Designs eine große Variationsbreite, die über standardmäßig festgelegte Designs weit hinausgeht. Beispielsweise kann ein Golfspieler festlegen, dass er einen vergleichsweise großen Sehbereich für den Abschlag - mit der für ihn individuellen Entfernung zum Ball beim Abschlag -, eine vergleichsweise kurze Progressionszone und einen großen Fernbereich für die Verfolgung des abgeschlagenen Golfballs wünscht. Dieses individuell festgelegte Designs wird dann an einen Hersteller oder an ein optisches Rechenbüro übermittelt; auf Grund der Vorgaben wird ein auch bezüglich der Designdaten vollständig individuelles Brillenglas berechnet (optimiert) und gefertigt.

Bevorzugt plant der Augenoptiker oder der Kunde das Design am Bildschirm eines Computers in wenigen Schritten mit Hilfe eines graphischen Interfaces. Ganz entscheidend für die Akzeptanz des Tools durch den Augenoptiker ist eine einfache, aber effektive Benutzerführung, die den Bediener nicht verwirrt. Im einfachsten Fall kann er die zum Design nötigen, nachfolgend beschriebenen Schritte aus sogenannten Templates nach einem Baukastensystem zusammensetzen. In komplexeren Fällen kann der erfahrene Benutzer aber auch sehr detailliert in das Design eingreifen. Der Augenoptiker gibt zunächst die üblichen Messwerte (Rezept und alle individuellen Brillendaten) über numerische Eingabefelder ein und legt fest, um welchen Glastyp es sich handelt, also beispielsweise um ein Ein- oder Mehrstärkenglas oder um ein Gleitsichtglas. Mit einem Zeigegerät (Maus) und/ oder über numerische Eingabefelder legt er dann die Objektentfernung für die einzelnen Sehbereiche fest. Diese Objektentfernung kann insbesondere eine Funktion von zwei unabhängigen Variablen, nämlich der horizontalen und der vertikalen Ortskoordinate sein. Die Objektentfernung kann aber auch eine konstante Funktion sein, z.B. 40 cm für eine reine Lesebrille oder Unendlich für eine Fernbrille. Die Objektentfernung kann aber auch eine variable Funktion sein, z.B. mit Werten zwischen Unendlich im oberen Bereich und 40 cm im unteren Bereich des Glases, was für Standard-Gleitsichtgläser typisch wäre. Man kann solche Standardwerte in einem Auswahlmenü des Tools vorgeben. Beispielsweise kann das Festlegen des Objektabstandes für Ferne und Nähe in den Bezugspunkten 0 dpt (Entfernung für die Ferne) und -2,5 dpt (Entfernung für die Nähe) erfolgen. Der Augenoptiker kann die Objektentfernung aus einem Satz von vorgeschlagenen Funktionen wählen, wobei er jedoch in keinster Weise an diese Vorgaben gebunden ist. Denn zwischen diesen Standard-Objektabstands-Funktionen gibt es noch unendlich viele andere Möglichkeiten, denjenigen Verlauf des Objektabstandes zu bestimmen, der für die individuellen Bedürfnisse des Kunden optimal erscheint. Der Augenoptiker kann die Parameter der gewählten Funktion so variieren, dass sie optimal auf die Sehanforderungen des Kunden abgestimmt sind.

Dabei ist es insbesondere möglich, ein progressives Brillenglas bzw. ein Gleitsichtglas nicht nur mit zwei Bereichen für die Fernsicht und die Nahsicht, sondern auch mit drei oder mehr Bereichen für unterschiedliche Entfernungen, beispielsweise für Zwischenentfernungen auszustatten, wie sie beispielsweise bei so genannten Pilotenbrillen benötigt werden.

Weiterhin ist es möglich, für den Nahbereich oder einen zusätzlich vorgesehenen Zwischenbereich nicht nur die Objektentfernung individuell festzulegen, sondern die Objektentfernung auch als Funktion der horizontalen und der vertikalen Koordinaten in Gebrauchsstellung vorzugeben. Dies kann beispielsweise für Schreibtischbrillen oder Brillen für Bildschirmarbeitsplätze sinnvoll sein.

Die Akkommodation, derer der Kunde noch fähig ist, wird im Falle einer Mehrstärken- oder Gleitsichtbrille standardmäßig aus dem Rezept und der Objektabstandsfunktion berechnet oder vom Augenoptiker bestimmt und eingegeben.

Im nächsten Schritt richtet der Augenoptiker mit einem Zeigegerät, wie beispielsweise einer Maus und/oder über numerische Eingabefelder die Bereiche guten Sehens. Bestimmt zum Beispiel durch hohen erzielbaren Visus, auf dem Glas geeignet ein und verteilt die Abbildungsfehler, wie z.B. Refraktionsfehler und Astigmatismus und evtl. auch höhere Terme der Abbildungsfehler, wie Gradienten oder dgl.. Eine zentrale Rolle dabei spielen die Grenzlinien, die die Zonen guter Sicht von den Zonen schlechter Sicht trennen. Diese Kurven können in bekannter Weise durch Splines dargestellt werden und über die Verschiebung von sogenannten Steuerpunkten in ihrer Form geändert werden. Der das Tool bedienende Augenoptiker "spielt" solange mit der Lage der Steuerpunkte, bis er mit der Form der Grenzlinien zufrieden ist, und die Zonen guter Sicht in denjenigen Bereichen auf dem Glas liegen, die der Kunde für seine individuellen Sehanforderungen benötigt. Solche Grenzlinien können für alle Abbildungsfehler eingegeben werden. Sinnvollerweise werden mindestens die Graphiken für (Gesamt)-Astigmatismus, Refraktionsfehler (insbesondere in Gebrauchsstellung) und Visus gleichzeitig auf dem Bildschirm nebeneinander dargestellt.

Auch hier kann das Verfahren durch ein standardisiertes Vorgehen vereinfacht werden. So kann beispielsweise die Auswahl der Bereiche guter Sicht erfolgen durch
- Festlegen der hauptsächlich benutzen Bereiche und entsprechende Gewichtung, z.B. Gewichtung 1-3 (1 = geringe Nutzung, 3 = bevorzugte Nutzung)
- Spezifikation des Designtyps, z.B. mit einer Gewichtung von 1-3, wobei 1 = hart (große Bereiche guter Sicht, harte Übergänge) und 3 = weich (kleine Bereiche guter Sicht, weiche Übergänge) darstellt
- Wahl der Progressionslänge: kurz, mittel, lang

Als ein weiteres Designmerkmal kann der Betrag und der Ort des maximal auftretenden Abbildungsfehlers, beispielsweise des Gesamt- oder Flächen-Astigmatismus, vorgegeben werden.

Nicht jedes beliebige Design ist jedoch bei einem Brillenglas realisierbar. Aus geometrischen und physikalischen Gründen sind gewisse Nebenbedingungen zu beachten. So kann bei gegebener Addition der Progressionskanal eines Gleitsichtglases nicht beliebig breit gemacht werden. Der Satz von Minkwitz gibt einen Hinweis auf die Breite und damit auf die Position derjenigen Steuerpunkte, die in der unmittelbaren Umgebung des Progressionskanals liegen. Das Tool wird Widersprüche und Ungereimtheiten wie z.B. einen zu breiten Progressionskanal oder einen zu geringen maximalen Astigmatismus durch geeignete interne Abfrageroutinen vermeiden.

Des weiteren ist es sinnvoll, rechtes und linkes Brillenglas gleichzeitig zu designen. Damit kann ein Augenoptiker erstmalig auch habituelle Probleme, z.B. krankheitsbedingtes Schräghalten des Kopfes, angehen, und die Bereiche guten Sehens auch für untypische Kopfhaltungen symmetrisch gestalten, oder auch auf Unsymmetrien im binokularen System reagieren, wie zum Beispiel auf unterschiedliches Konvergenzverhalten oder unterschiedliches Akkommodationsvermögen des rechten und linken Auges. Außerdem kann das Führungsauge (rechtes oder linkes Auge) und/oder die Ausprägung der Dominanz des Führungsauges angegeben und beim Design und der Herstellung des Glases berücksichtigt werden.

Insbesondere können dabei in Sonderfällen auch unterschiedliche Verläufe des Hauptmeridians bzw. der Hauptlinie (die der Hauptblicklinie folgt) gewählt werden. Dabei ist des möglich, den Gradienten der Brechwertzunahme und/oder den nasalen Versatz der Hauptlinie unterschiedlich zu gestalten.

Die Spezifikation weiterer, individueller Parameter des Brillenträgers wie beispielsweise die Qualität des Binokularsehens und/oder Visus_{cc} kann beispielsweise folgendermaßen erfolgen:

| Sehschärfe (Visus_{cc}) | 1,2 |
|---|---|
| Binokularsehen | 3 |
| (0 = nicht vorhanden | |
| 1= vorhanden | |
| 3 = sehr gut) | |

Wenn der Augenoptiker mit dem von ihm am Bildschirm entwickelten individuellen Design zufrieden ist, überträgt er die Steuerdaten beispielsweise per DFÜ an den Hersteller des Brillenglases, der das Glas auf einem entsprechenden Rechner nach seinen Vorgaben optimiert. Im Optimierungsprozess wird das Pfeilhöhenfeld so abgestimmt, dass das Brillenglas in Gebrauchsstellung den Vorgaben bestmöglichst entspricht. Dabei werden zunächst die eingegangenen Designparameter auf Plausibilität und Machbarkeit geprüft und ggf. eine Gewichtungsfunktion, deren Parameter die Wirkungshaltigkeit in den Bezugspunkten gewährleisten, spezifiziert.

Für den Fall, dass das Optimierungsergebnis weit von den vom bestellenden Augenoptiker gemachten Vorgaben abweicht, wird dies baldmöglichst (innerhalb weniger Sekunden) an den Augenoptiker rückgemeldet. Dieser kann dann entscheiden, ob er das Resultat so akzeptiert oder ob er seine Vorgaben entsprechend abändert.

Anschließend wird ein Brillenglas (Brillenglaspaar) nach den eingegangenen Vorgaben mit numerischen Verfahren aus dem Stand der Technik optimiert und das Optimierungsergebnis auf die Erreichung des vorgegebenen Designs geprüft.

Danach kann das Optimierungsergebnis sogar auf Verletzung bekannter Patente geprüft werden.

Das überprüfte Optimierungsergebnis wird in Form von Plots der Abbildungseigenschaften rückübermittelt.

Ggf. findet eine Iteration statt, bis die rechnerisch optimierte Fläche das gewünschte Design aufweist, oder es wird das Wunschdesign abgeändert. Schließlich wird das Brillenglaspaar gefertigt und in eine Fassung eingeschliffen.

Somit kann der Augenoptiker - interaktiv oder auf den ersten Wurf - selbst Designs entwerfen.

Diese aufwendige Beratung steigert die Kompetenz des Augenoptikers gegenüber dem Kunden. Der Augenoptiker kann sich als Problemlöser für schwierige, außergewöhnliche Fälle profilieren und er hat ein Tool an der Hand, um interessierte, informierte Kunden zu beeindrucken.

Der Augenoptiker hat die Möglichkeit, auf die Wünsche und Bedürfnisse des Kunden einzugehen, und diese direkt umzusetzen. Die individuelle Beratung vermittelt dem Kunden das Gefühl, "gut aufgehoben" zu sein. Zudem hat der Augenoptiker die Möglichkeit, dem Kunden die Entstehung und somit die Individualität seiner Brille "erleben" zu lassen.

Durch das Visualisieren der Brillen(glas)entwicklung wird die Kompetenz des Augenoptikers für den Kunden sichtbar, so dass der Brillenkauf zum echten Erlebnis wird.

Insgesamt steigert das erfindungsgemäße Vorgehen die Kundenbindung und ermöglicht es dem Augenoptiker, sich gegenüber den Mitbewerbern abzusetzen.

## Patentansprüche

1. Verfahren zum Entwerfen und Optimieren eines individuellen Brillenglases, **dadurch gekennzeichnet, dass** ein Entwurf eines Designs durch einen Augenoptiker am Bildschirmarbeitsplatz mittels eines Computerprogrammes erfolgt, dass dieses Design an einen Hersteller oder an ein optisches Rechenbüro übermittelt wird, und dass der Hersteller anhand dieser Vorgaben ein individuelles Brillenglas optimiert, wobei der Entwurf des Designs durch den Augenoptiker am Bildschirmarbeitsplatz mittels des Computerprogrammes folgende Schritte umfasst:
a) Definieren des Brillenglastyps,
b) Festlegen des Objektabstandes als Funktion der horizontalen und vertikalen Koordinate,
c) Festlegen der Akkommodation,
d) Einrichten der Bereiche guter Sicht über die Justierung des Verlaufes der Grenzlinien, die die Zonen guter Sicht von den Zonen schlechter Sicht abgrenzen,
e) Bestimmen des Ortes und des Betrages des maximalen Abbildungsfehlers oder des minimalen Visus,
wobei das Computerprogramm anhand von geeigneten Abfrageroutinen geometrische und physikalische Nebenbedingungen beachtet
wobei die Optimierung des Brillenglases durch den Hersteller oder durch ein optisches Rechenbüro nach den Designvorgaben des Augenoptikers in folgenden Teilschritten erfolgt:
a') Prüfen der eingegangenen Designparameter auf Plausibilität und Machbarkeit,
b') ggf. Spezifizieren einer Gewichtungsfunktion, deren Parameter die Wirkungshaltigkeit in den Bezugspunkten gewährleisten,
c') Optimieren des Brillenglases nach den eingegangenen Vorgaben mit numerischen Verfahren aus dem Stand der Technik,
d') Prüfen des Optimierungsergebnisses auf die Erreichung des vorgegebenen Designs,
e') wobei,
für den Fall, dass das Optimierungsergebnis weit von den vom bestellenden Augenoptiker gemachten Vorgaben abweicht, dies baldmöglichst an den Augenoptiker rückgemeldet wird, welcher dann entscheidet, ob er das Resultat so akzeptiert oder ob er seine Vorgaben entsprechend abändert,
f') ggf. Iterieren, bis die rechnerisch optimierte Fläche das gewünschte Design aufweist, oder Abänderung des Wunschdesigns.

## Claims

1. Method for designing and optimising an individual spectacle glass, **characterised in that** an outline of a design is effected by an optician at the work station by means of a computer programme, **in that** this design is passed on to a manufacturer or to an optical computing office and **in that** the manufacturer optimises an individual spectacle glass from these specifications, the outline of the design by the optician at the work station by means of the computer programme comprising the following steps:
a) defining the type of spectacle glass,
b) ascertaining the object distance as a function of the horizontal and vertical coordinate,
c) ascertaining the accommodation,
d) establishing the regions of good vision via adjustment of the course of the boundary lines which delimit the zones of good vision from the zones of poor vision,
e) determining the location and the amount of the maximum aberration or of the minimum vision,
the computer programme taking into account geometric and physical secondary conditions using suitable query routines,
the optimising of the spectacle glass being effected by the manufacturer or by an optical computing office according to the design specifications of the optician in the following partial steps:
a) checking the received design parameters for plausibility and feasibility,
b) possibly specifying a weighting function, the parameters of which guarantee maintaining the effect at the reference points,
c) optimising the spectacle glass according to the received specifications by numerical methods from the state of the art,
d) checking the optimising result for achieving the specified design,
e) in the case where the optimising result deviates widely from the specifications made by the ordering optician this being reported back to the optician as soon as possible, who then decides whether he accepts the result as such or whether he changes his specifications correspondingly,
f) possible iteration until the computer-optimised surface has the desired design, or changing the desired design.

## Revendications

1. Procédé pour concevoir et optimiser un verre de lunette individuel **caractérisé en ce qu'**une conception d'un modèle est effectuée par un opticien sur l'écran du lieu de travail au moyen d'un programme d'ordinateur, que ce modèle est transmis à un fabricant ou à un bureau de calcul en optique, et que le fabricant, en tenant compte de ces indications, optimise un verre de lunette individuel, la conception du modèle par l'opticien sur l'écran de son lieu de travail au moyen d'un programme d'ordinateur comprenant les étapes suivantes :
a) définition du type de verre de lunette,
b) détermination de la distance objet en fonction de coordonnées horizontales et verticales,
c) détermination de l'accommodation,
d) mise en place des domaines de bonne vue par l'intermédiaire de l'ajustement du tracé des lignes de limites qui délimitent les zones de bonne vue et les zones de mauvaise vue,
e) établissement du lieu et de la quantité d'aberration otique maximale ou de la vision minimale, où le programme d'ordinateur, en tenant compte des questions de routine appropriées, considère les conditions secondaires géométriques et physiques,
où l'optimisation du verre de lunette par le fabricant ou par le bureau de calculs selon les indications du modèle par l'opticien est réalisée avec les étapes partielles suivantes :
a') examen des paramètres du modèle enregistrés au niveau de la plausibilité et de la faisabilité,
b') éventuellement, spécification d'une fonction d'appréciation dont les paramètres garantissent l'efficacité pour les points en question,
c') optimisation du verre de lunette selon les indications enregistrées par un procédé numérique de l'état de la technique,
d') examen du résultat de l'optimisation en ce qui concerne la réalisation du modèle prescrit,
e') où,
dans le cas où le résultat de l'optimisation dévierait beaucoup des indications de la commande donnée par l'opticien, ceci serait signalé le plus rapidement possible à l'opticien qui déciderait alors si le résultat est accepté tel quel ou s'il modifie ses indications en conséquence,
f') éventuellement, itération jusqu'à ce que la réalisation optimisée par calcul représente le modèle souhaité, ou modification du modèle souhaité.
